(19) Europäisches Patentamt / European Patent Office / Office européen des brevets

(11) **EP 3 889 123 B1**

(12) **EUROPEAN PATENT SPECIFICATION**

(45) Date of publication and mention
of the grant of the patent:
**21.12.2022 Bulletin 2022/51**

(21) Application number: **21020178.6**

(22) Date of filing: **01.04.2021**

(51) International Patent Classification (IPC):
*C05F 9/02* (2006.01)      *C05F 17/95* (2020.01)
*C05F 17/964* (2020.01)      *E04F 17/12* (2006.01)

(52) Cooperative Patent Classification (CPC):
**C05F 9/02; C05F 17/95; C05F 17/964; E04F 17/12;**
E04F 17/123; E04F 17/126; Y02A 40/20;
Y02P 20/145; Y02W 30/40

(54) **HOME COMPOSTER**

HEIMKOMPOSTER

COMPOSTEUR DOMESTIQUE

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(30) Priority: **02.04.2020 IT 202000006895**

(43) Date of publication of application:
**06.10.2021 Bulletin 2021/40**

(73) Proprietor: **Fiorente, Francesco Paolo**
**70015 Noci (BA) (IT)**

(72) Inventor: **Fiorente, Francesco Paolo**
**70015 Noci (BA) (IT)**

(56) References cited:
JP-A- H06 107 303        KR-A- 20030 039 880
US-A1- 2018 215 676

EP 3 889 123 B1

## Description

### Field of application

The field of application of the invention concerns one of the great challenges of the modern era: the governance of the municipal solid waste cycle. It refers, in particular, to the recovery of the organic fraction, that is to that type of waste that creates the greatest criticalities to the current collection and recovery models. The main causes are:

- It is the largest percentage of waste that is produced (about 33%).
- It is putrescible and therefore involves problems of greenhouse gas emissions, odor impacts, unhealthy management services and imposes limiting accumulation, collection, separation, transport and transformation systems.
- In the different types of separate collection, it represents the first cost item, both for the higher rate linked to the collection service (higher collection frequencies, more personnel for collection, etc.), and for that destined for transport and conferment to centralized recovery plants.
- The correct management of wet waste in the currently more efficient collection system, "door-to-door separate collection with punctual rewards", entails burdens and hassles for the citizen, for the administrations and the urban cleaners and in any case involves numerous technical and economic problems including the main ones:

    ◦ The quantity and quality of the differentiated material largely depend on the civic sense and scrupulousness of the citizen; therefore in the workforce there is always a more or less high quantity of non-compostable material, which in many cases involves the production of out-of-specification or non-marketable compost, while in other types of waste (plastic, paper, glass and metals, etc..), there is a certain percentage of organic substance which affects the optimal recovery of these fractions.
    ◦ Accumulation in ventilated tubs to be kept at home under the sink or on the balcony creates health problems (odors, pets), requests for increased frequency of collections, littering phenomena, etc.
    ◦ Placing the waste bin of the staff outside in front of the door for collection at set times, in addition to creating a certain annoyance for the citizen and inconvenience to traffic and the passage of pedestrians, involves hygiene problems for the visits of stray animals;
    ◦ During door-to-door separate collection, the withdrawal of the single bucket by the worker, who must check its contents, weigh it and empty it manually in the means of transport, involves inefficiency of operations, unhealthy service, high costs;
    ◦ The mechanical means of collection and transport of the wet, as they are conceived, do not facilitate the emptying operations, especially of the tubs and larger containers supplied to restaurants and collective canteens and require periodic cleaning and sanitizing operations.

To these critical issues, typical of the collection, are added the subsequent ones relating to recovery methods. In fact, if the wet is brought to the centralized, aerobic or anaerobic recovery plants, the main drawbacks are:

- Poor quality of the compost produced, resulting from the poor quality of the organic material delivered;
- Significant initial investment costs for the construction of centralized composting and / or DA plants (500-1000 € / ton of material that can be processed in one year);
- Environmental impacts (odors, aerosols, land occupation, etc.);
- Overcoming the resistance of citizens residing in the vicinity of these plants;
- Wet management costs that are often prohibitive for small communities.

In the event that the wet is processed in community composters, ie "electromechanical machines" in which the aerobic process is maintained and accelerated by the continuous supply of air combined with the artificial increase in temperature, the drawbacks of the state of the art are:

- Permits must be issued for their use;
- Their use involves logistical difficulties connected to the need for individual citizens to transfer to the composter near the waste, who must practically go to the electromechanical composter at least 2 - 3 times a week and manually pour the bucket or the biodegradable bag;

- Need to allocate the proximity composters in an open space for the removal of odors, but also under covered structures or canopies for shelter from the rain. Therefore: the availability of a suitable site; the issue of building permits for the structure that contains them and environmental permits for carrying out the composting activity;
- Their operation requires the work of an employee who controls the machine and the process, periodically empties the compost and unloads it on open ground in a dedicated space to complete the ripening operations; then manage its use as a composted soil conditioner.

- They require a connection to an electrical, water utility, and are characterized by a certain energy consumption.
- They are usually installed near sensitive areas such as schools, kindergartens, campsites, canteens, etc., creating a certain environmental impact, while if they are located in more isolated areas they induce a reduced environmental impact, but increase the overall costs of the service;

From the foregoing it is clear that the state of the art relating to the management of municipal waste presents significant critical issues mainly due to the problem of unsolved wetness.

Hence the European directives and regulations of the various states aimed at encouraging domestic composting with economic support and awareness campaigns, but with poor results.

Today self-composting is practiced by a small number of citizens, those who have a piece of garden in which to install a garden composter, while domestic composting carried out inside the houses is very little practiced due to the odor problems it creates and for the malfunction of indoor composters existing on the market.

The present invention finds application in the technical field of self-composting carried out inside homes and solves the technical problem of being able to practice it without problems.

It has as its object an innovative composter that allows you to theoretically extend home composting to all families and therefore implement prevention for almost all of the organic waste produced.

Furthermore, due to its particular construction and conformation, it can be connected to an external vertical composter, home-condominium and process large quantities of wet, i.e. function as an apparatus within which to carry out the operations of preparation of the compostable, such as shredding, squeezing water and leachate, mixing with structurant, pasteurization-sterilization and eventual stabilization, while completing the degradation process in the external composter.

## State of the art

The art of composting has been practiced for many years and if at present, beyond all the critical issues highlighted above, proximity composting carried out with electromechanical composters can be considered technologically mature, from a procedural point of view. Recovery of the wet in centralized industrial plants, aerobic or anaerobic, certainly no progress has been made for self-composting, where the technologies concerning domestic composters have stopped a few decades ago.

The patents issued, relating to domestic composters are really many, and they almost exclusively concern garden composters, while real indoor composters are very few; precisely all the documents concerning domestic composters can be grouped into three groups:

a) Garden composters. On the market there are many products, of various shapes and capacities, fixed either with material turning systems, in plastic, wood or other materials. Composting with these devices is carried out outside, in a corner of the garden, recovering the organic food remains and products deriving from garden cleaning (leaves, shredded pruning waste). With these devices, if the composter is driven by passion and wants to devote some work and time to composting, good results are usually obtained. However, the use is limited to a very low percentage of users, only those who own a patch of garden.

b) Indoor dehydrators. Small appliances, passed off as composters, which grind the wet, heat it to high temperatures, turn it over and air it until it is completely dehydrated, transforming it, within a few hours, into a soil with a strong acrid smell. This product is not stabilized because if it comes in contact with a little water or humidity it starts to ferment again; nor is it an organic soil conditioner since if used in contact with plants it not only does not fertilize them, but damages them. These machines are used in the nautical industry because they reduce organic waste by 80-90%, but do not recover it; in fact, said soil must be disposed of by referring to specialized companies for their recovery.

c) Indoor composters. They are small machines equipped with at least an electric shredding and mixing system, a pump for the aeration of waste, an odor filter and an electrical resistance that ensures that the temperature remains high and constant inside a thermo-insulated container. The main purpose of these devices is to allow immediate differentiation of organic waste produced in the kitchen, where food waste is placed inside the machine together with suitable enzymes, and the machine mixes and aerates them appropriately, obtaining, within a couple of of days a material probably partially degraded. The main problem, however, is that said composter can only work without excessive inconvenience if:

- Do not compost fish or meat remains, which create problems of animals and bad smells;
- The proportions (C / N ratio) of the initial substances introduced into the machine are well controlled, which is not at all easy for those who do not have an accurate and adequate preparation in composting;

- Do not compost food waste of fruit and vegetables out of season or from distant countries because they will surely have been previously treated by fungicidal or stabilizing substances that will behave as such even with the aerobic bacteria responsible for composting.

Those who do not strictly follow the above tips will, in most cases, find the house flooded with nauseating smells.

Furthermore, even if all the aforementioned precautions are carried out, the operation of the machine still presents some critical issues that advise against its use, such as:

- The process or composting air, i.e. that is blown into the compostable, is discharged into the kitchen; it will inevitably contain a certain amount of foul-smelling compounds and bioaerosols, the greater they are, the less efficient the filtering system applied or its operating efficiency will be; in particular, bioaerosol emissions are potentially dangerous for human health due to the possible presence of pathogenic micro organisms.
- Need for periodic maintenance of the machine to keep the filters efficient and periodic replacement of the same;
- Problem of leachate, which could escape from the machine;
- Product obtained that requires subsequent treatment as it is a non-stabilized material.

The documents closest to the invention in question are:

1. No. EP2772474; Title: "VERTICAL COMPOSTER FOR HOME-CONDOMINIUM AND PROCESS FOR MANAGEMENT OF MUNICIPAL SOLID WASTE BY USING THEREOF"; Owner: FIORENTE Francesco Paolo; Inventor: FIORENTE Francesco Paolo.
2. N° 0001429407; Title: "COMPOSTABLE REPLACEMENT MECHANISMS FOR THE VERTICAL CONDOMINIUM HOME COMPOSTER"; Owner: EN.EC: S.R.L .; Inventor: FIORENTE Francesco Paolo

The aforementioned patents concern external home-condominium vertical composters designed by the inventor himself, which however do not fall into the three aforementioned groups because they are home-condominium composters not positioned inside the apartments and not allocated in the garden.

They are composters in all respects because, like garden composters, they transform the wet waste into compost, but they are allocated on the external walls of the building.

The present invention falls within the family group of these patents because the latter had provided an appliance connected to them to be installed in the user's kitchen in correspondence with the pipe connected to the composter, in order to guarantee optimal process conditions and to reduce composting times, which, in addition to shredding / defibration in the optimal sizes and homogenization of the organic material integrated with a possible structuring agent, allowed a preliminary elimination of water through the use of a draining tank in which to station the material after shredding and after periodic upheavals.

The present invention refers to the household appliance envisaged in the aforementioned documents, to which, however, the functions have been expanded since they can itself function, alone, as an efficient indoor composter.

Leaving aside the group of garden composters and indoor dehydrators, which refer to completely different apparatuses, other documents closer to the present invention are to be found among those foreseen in the group of indoor composters (group C). Among these those closest to the present invention are the group of 17 applications for: N ° US2018215676 (A1); Title: "METHOD AND APPARATUS FOR OPERATING A COMPOSTER DEVICE"; Applicant: WHIRLPOOL CO; Inventor: MAGHAS Rachel et others.

The aforementioned documents protect a family of patents concerning a household appliance indicated by the inventors in the documents cited as a "composting device". So is it supposed to be an indoor composter. In the case of a composter, however, it is necessary to associate this term with an apparatus that transforms, through exclusively aerobic degradation reactions, the organic substance produced in the kitchen into compost or at least into a completely stabilized product.

It has small dimensions and it is described that it transforms the damp, in a very short time of 24 - 48 hours, into a soil which, however, is not specified what it is; or if it is compost, or a dehydrated soil or a partially degraded material.

It is known that the machine shreds the wet; that this is supplemented by enzymes, is heated, ventilated with multiple air ways, etc. Such treatments, it is known, accelerate the composting cycle, that is, they accelerate the chemical-biological degradation reactions, but the more they accelerate it, the more they remove it from the natural process of organic degradation which is a slow process that requires a minimum of 6 months to be carried out without problems and to give a compost product that falls within the regulatory parameters. These times are necessary because the various chemical compounds present in the humid are degraded at different times and due to the action of families of different microorganisms that colonize the compostable during the various stages of the process and that require conditions of temperature, humidity, and supply. of different oxygen.

The criticality of Whirlpool devices derives from these considerations. In fact, it is unthinkable that compost will form within 24-48 hours; at most the simplest sugars will be degraded, and even if it happens, this phase will surely be accompanied by a series of problems. In fact, considerably increasing the reaction rate implies considerably increasing the quantity of the reaction products. They are mainly made up of carbon dioxide and water in a gaseous state, but also of nitrogen compounds (ammonia), sulfur compounds (bad smelling), and VOCs - Volatile Organic Compounds, bioaerosol. They will be the greater, the greater the reaction speed. Since for these devices it is expected that the composting air is dispersed in the kitchen, it implies that the concentration of these substances can reach high values, even though they have been previously passed through filters. It follows that they will certainly create some problems, especially when the filters lose their efficiency with use.

Another critical issue is the leachate and squeezing water disposal system which are brought to complete evaporation and released into the kitchen.

Another critical issue is the fact that it is not possible to wash the wet path. Further domestic composting systems are disclosed in JP H06 107303A and KR 2003 0039880 A.

**Technical problem**

All these criticalities have been overcome in the device in question, which is specially designed to produce harmless reaction products, considering that the composting times are prolonged and produce a composting that is close to the natural one.

The configuration with several chambers within which the natural conditions of the various phases are simulated, allows obtaining an excellent compost to be used as an organic soil improver directly.

The technical problem that the invention solves is to theoretically extend indoor domestic composting to all families; overcome the criticalities of the MSW management system; install a waste system on the residential building, like a water-sewer or thermal system, etc.

In fact, the main purpose of the present invention is to provide a composter capable of composting all the organic substances produced at home or in a restaurant or canteen, autonomously and without environmental problems and using a simple and relatively space-saving composter which above all allows to compost continuously and without additional costs, but rather facilitating operations and tasks compared to all systems currently used. The scope of the invention is defined according to the apparatus disclosed in claim 1.

The organic waste material is separated upstream from the other fractions as it is produced and inserted into the innovative apparatus where it is automatically, or with a few operator actions, processed and unloaded.

The innovative device is designed to meet the needs of various users: it can be used by a single user or a large family or by a restaurant or canteen that produces several kilos of wet per day. In fact, in addition to the variable dimensions of the machine that allow it to be used as a composter for various users, there is the possibility of coupling it to an external vertical composter and allowing the slow degradation and ripening phase to take place in the latter, thus significantly increasing the quantity of wet. theoretically processable.

The composting process that takes place within the innovative apparatus respects the natural composting times, that is, it only accelerates the bio-oxidative stabilization phase providing the microorganisms with the best chemical, physical and biological conditions so that the decay of the organic substance takes place in an optimal way. , while letting the subsequent decay happen as naturally as possible.

Precisely only in the fermentation-biooxidation phase (mixing and fermentation chambers) are artificial variations in conditions foreseen:

- Chemical: possibility of inserting in the mixing chamber, before the organic remains, the quantity of structuring agent such as to give the mixture an optimal C / N ratio and shredded in the sizes that favor the best degradation;
- Physical: ability to drain the squeezing water and leachate and divert them to the sewer pipe or to a special tank for their recycling; better porosity of the compostable deriving from mixing with the structuring agent chopped in the appropriate sizes; optimal humidity conditions resulting from continuous monitoring of conditions and the possibility of automatic correction by introducing either water vapor, if this falls below a certain value, or hot dry air, if the humidity is above the optimal limits or cold dry air if it is necessary to subtract heat from the compostable; artificial increase in the temperature of the mass to ensure conditions of existence and optimal proliferation of microorganisms.
- Biological: possibility of introducing suitable enzymes to accelerate biological reactions; trituration of the wet in the optimal sizes in relation to the drainability of the leachate (greater surface of attack of bacteria).

The aforementioned optimal conditions do not need to be ensured to the material that stays in the lower chambers of the appliance, where only turning and monitoring of the optimal temperature and humidity conditions is envisaged, which can be corrected in case of excessive deviation from the optimal limits while the material poured into the external composter, which will only be subjected to the ripening phase, is only provided with aeration.

The electromechanical composter is designed for use in the kitchen. In fact, preferably, it has the dimensions to be installed, like the dishwasher or stove, in modular kitchens to reduce user burdens; that is, to improve the housewife's operations and to put her in a position to separate the humid upstream and automatically divert it to the recovery process.

Furthermore, it has all the characteristics of industryability precisely because it has the functionality to be installed in modular kitchens and for this reason, in addition to allowing the separation upstream of the humid from other types and recovering it on site, it considerably reduces the burdens and duties for the citizen. and exploits the connection with the systems, and other household appliances and, possibly, with the external composter. Indeed:

- It is the only indoor composter that provides for the emission of composting air outside the building;
- It is directly connected to the water-sewer system for periodic cleaning of the shredder and the fermentation chambers which can be washed periodically with running water at each start of the cycle;
- It exploits the connection to the sewer pipe both to remove the cleaning water and the squeezing liquid and leachate;

- It is connected to the extractor hood of the kitchens, both to moisten / heat the compostable using the water vapor produced during cooking, and to use the flue, if the apparatus is not connected to the external vertical composter connected to the hood to remove and expel both the air passing through the compostable and the air sucked in from the cavity;
- It uses domestic hot water, and / or, possibly for energy saving, also the hot water expelled from the dishwasher or clothes washer after washing, for heating the compostable;
- It could exploit, again for energy saving, the very hot air expelled from the convection oven, in all cases in which it will be used for cooking food, and for pasteurizing-sterilizing (elimination of pathogenic bacteria and weed seeds) the material present in the mixing chamber, both to completely evaporate the leachate in the event that it is not intended to be diverted to the sewer;
- The variability of the number, shape, size of the reaction chambers of the composter makes it modular and flexible, usable by families consisting of any number of components and also, in combination with the external vertical composter, even by canteens that provide meals by the hundreds of users; this makes it possible to produce composters with minimum dimensions in relation to the number of users, unlike other electromechanical composters on the market which generally require a large surface or a large volume for installation;
- The innovative electromechanical composter is designed to produce compost automatically and continuously.

Another purpose is to overcome the criticalities of the MSW management system; The currently most performing household waste management (Door-to-Door Separate Collection, with application of a punctual reward system) is characterized by the following critical issues:

- Logistics: the flow of materials is performed with high levels of Environmental inefficiencies: significant environmental impacts in the various phases: domestic management; withdrawal; transport; recovery; disposal;
- Economic: the costs for the garbage collection service are high and have increased with the RD PaP;
- Social: the current waste cycle is rejected by citizens; the burdens and annoyances of the citizen have increased with the RD); social problems for the condominium management of tubs; stray animal problems or littering, etc.

From the above it is clear that the household waste cycle must be rethought at all levels. It is necessary to make the waste cycle more natural, simpler, less burdensome for the citizen.

To do this, it is necessary to redesign the entire domestic waste supply chain from a system perspective, equipping the residential building with a specific "Waste Plant" This waste plant must make it possible to:

- Separate at least the organic waste from all other waste, to avoid a good part of the criticalities highlighted above, or, in the case of more efficient plants, separate and separate all types of waste in a differentiated more efficient, before removing the various fractions, prepare them for recovery (compact them and / or shred them to reduce their volume, etc.) or, in the case of optimal systems, ensure that the wet is not only separated, but also transformed on site in compost or, at least, in a stabilized product;
- To transform the discontinuous activities, carried out by the citizen in the current model of RD, into continuous and automatic activities;
- It must be an integrated system in the building and directly connected to the kitchens of the various apartments, where all organic waste and most of the other types are produced.

The waste plant can be built with the use of an innovative household appliance, which in this case will be integrated with a compactor and crusher, for the volume reduction of some waste fractions and combined with a technical compartment in which to insert the specific pipes for the various fractions.

Other particular purposes that the invention pursues are:

- The innovative household appliance allows you to independently and automatically compost the organic matrices at the level of a single house or condominium, thus obtaining a compost of superior quality, free of unwanted substances;
- The user enters only food remains in the composter, possibly supplemented by a structuring agent (there is no possibility of error both because the user has no additional burdens to do so, but rather simplifications, and because the product is controlled by withdrawal that can easily be traced back to the undisciplined user and possibly not recognize the economic benefits);
- The removal of the putrescible material from the rest of the waste allows the upstream separation of plastic, paper, metals, glass, which, after any volume reduction performed in the appliance, are accumulated in their containers to be periodically transported to the collection centers, or they are discharged into special dedicated pipes, present in a specially built technical compartment and transferred to the condominium containers placed at the base of the building, to be periodically collected by the consortia responsible for their recovery and recycling; these secondary raw materials (no longer waste) do not contain unwanted substances, being subjected upstream to more thorough selection and can be sold at a higher price;
- Allows the production, use and sale of organic compost;
- Raises awareness of a civic-environmentalist conscience;
- Realizes a drastic decrease in the quantity of waste sent to landfill;
- Create the conditions for a zero or significant reduction in waste taxes.

**Description of the embodiment exemplified in the drawings**

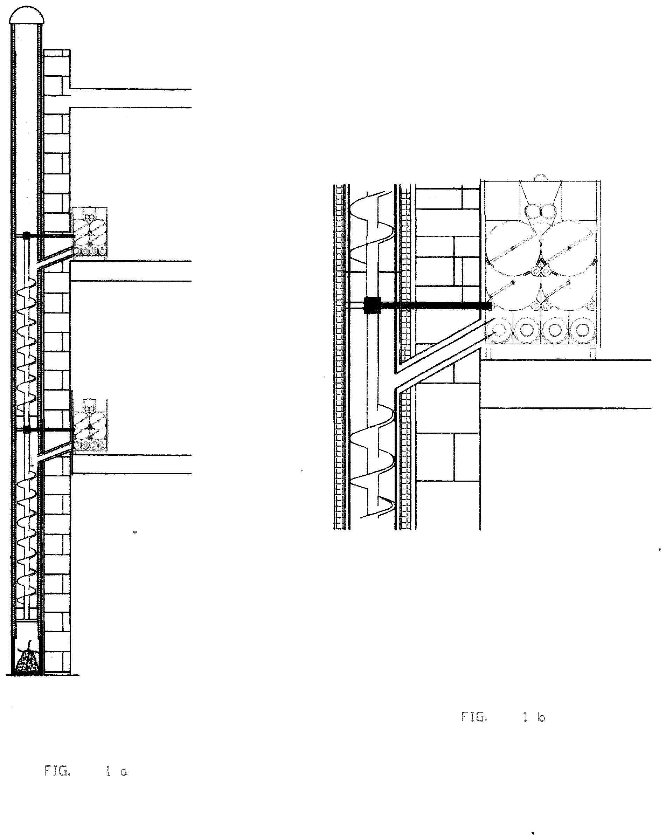

The attached figures 1a-b, 2a-d, 3, 4, 5, and 6a-d, 7, 8a-d, 9a-d are to be considered for purely illustrative and non-limiting purposes. The scope of the invention is defined according to the apparatus disclosed in claim 1.

Figures 1a and 1b show an external home-condominium vertical composter 100, connected through the concentric pipes crossing the external tompagno masonry to two home composters according to a first preferred embodiment of the present invention (hereinafter, for simplicity, called also 'appliances') located in the kitchens of the apartments on the two floors. One of these composters is denoted by the numerical reference 10.

Figure 1a depicts a sectional view of a wing of a building on which an external home-condominium vertical composter is installed connected, through preferably concentric pipes crossing the external tompagno masonry, to two household appliances in accordance with the present invention located in the kitchens of the apartments on two floors (one of the appliances is shown in detail in Figure 1b).

The above mentioned figures 1a and 1b represent the additional option, inherent in the composting appliance 10, of being able to also be combined with an external vertical composter 100 and in which case, to process large quantities of wet while keeping the dimensions of the internal appliance contained.. This situation could apply in cases where the innovative apparatus is used in the kitchens of restaurants or canteens.

The detail shows how the internal oblique tube 102 connects the lower compostable tank present in the appliance, with the internal tube of the composter, while the external tube 101 connects the interspace between the two casings of the appliance and the interspace between the two tubes of the external composter.

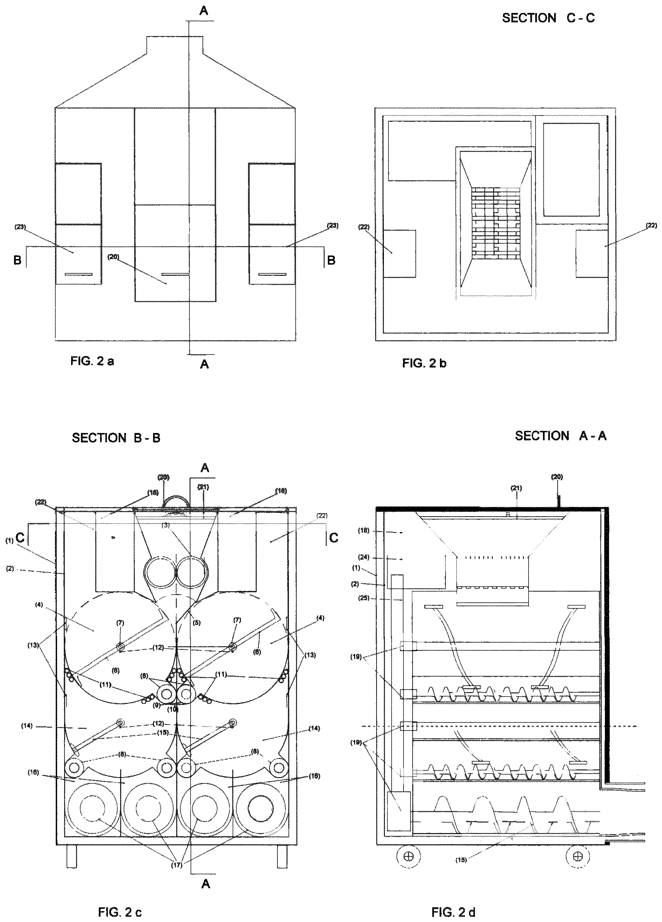

Therefore, the internal tube allows the transfer of the compostable and the passage of the composting air, i.e. the process air which is blown into the reaction chambers and which, due to the degradation reactions, is enriched, in addition to a certain quantity of foul-smelling substances, reaction products, carbon dioxide and water mainly. This air, which is passed inside the reaction tube of the composter, however, brings the amount of oxygen required to the compostable in maturation, before passing through the activated carbon filters present at the top and being expelled outside. Through the external concentric connection pipe, on the other hand, due to the chimney effect, a circulation of air is achieved from the kitchen to the interspace between the two casings of the appliance and from here to the interspace of the composter; this circulation creates a slight depression inside the cavity of the appliance compared to the atmospheric pressure present in the kitchen, ensuring that there is always a passage of air from the kitchen to the appliance and not vice versa. With reference to fig. 2a-d a preferred embodiment of the apparatus is shown, with a side view, a plan view and two sections.

The shell structure between the internal frame (2) and the external casing (1) is evident, which is equipped with a sliding upper opening (20) for introducing the moisture into the shredder hopper and opening for the input of the structuring agent (23).

The organic waste shredder (3) is in the case shown in the drawings with opposing blades and is equipped with a small loading hopper and lifting lid (21), equipped with a safety system that interrupts any operation of the shredder when it is raised. Below the shredder there are two mixing-fermenting trays (4) for the collection of the shredded organic, with a semi-cylindrical base to allow the material to be turned over without dead spots and the cleaning of the surfaces by affixing scraping elements to the ends of the stirrers.

The trays can be filled directly with the pulped organic material that descends from the shredder in an alternative way, thanks to a diverter system (5). Furthermore, said trays are directly connected to the outside with the duct (22) through which, at the beginning of the filling cycle of the single tray, after sliding opening of the door (23), the optimal quantity of structuring agent relative to the quantity of total humidity that will be inserted.

The mixing trays are equipped with: turning blades (6) integral with a central rotation axis (7); system for emptying the compostable with screw, housed in a semicircular surface perforated in the lower part to allow the passage of the squeezing liquid and / or leachate (9) in the collection area (10) below which conveys it to the sewer pipe or to a tray for complete recycling in the compostable; material heating system (11) with domestic hot water and / or hot air emitted by the ventilated and / or electric resistance oven; air and water vapor insufflators (12); temperature, humidity, air flow sensors (13).

Below the mixing trays are the fermentation trays (14), of reduced capacity compared to the upper ones, considering that the compostable as it degrades is reduced in volume and weight, until it becomes about 15 - 20% of the volume when it becomes mature compost. These reaction chambers are also equipped with: turning blades (15), which in this case stir the material with a pendulum movement with an angle of about 180 °; auger compostable emptying system; indirect material heating system that uses the heat exchanger with sanitary hot water (11) of the mixing chambers to heat only the air present in them, considering that the degradation of sugars is characterized by exothermic reactions that raise the temperature of the material naturally; temperature, humidity and air flow sensors (13) which in any case transmit the measurement parameters to the electronic control unit which blows in air or water vapor or atomised water, if the temperature and / or humidity values deviate from the optimal range.

Below the fermentation chambers are the containers in which the material transferred from the upper chambers completes the stabilization phase before being conveyed, with a screw system, to the external composter where the maturation phase will be completed.

Finally, inside the appliance there will be specific compartments (22) for the insertion of the structuring agent in the mixing chambers, or specific compartments obtained in the internal casing or in the area between the two casings containing: hydraulic unit (24) for operation and automation of the household appliance and the external composter consisting of a mini hydraulic unit, pumps configured in terms of shafts (25), doors, valves, covers, etc., motor (26), hydraulic cylinders (19), flow dividers, valves , oil pipes under pressure, etc .; piping for the compostable route; piping for the composting air route; pipes for the way of the air sucked from the cavity of the appliance; crank mechanisms necessary for the transfer of the electromotive force to the various moving parts; connections; valves; sensors for temperature, humidity, level, air flow, PH; reducers; supply fans; suction pumps; computer interfaced with the parameters sensors and with the hydraulic control unit controlling the control and operating organs of the appliance and the external composter.

The innovative apparatus, for its particular construction and conformation and for the possibility of connecting to the external home-condominium composter, or doing without it, and to the aspirators and fans of the kitchen extractor hood, in turn connected to the flue that ensures the air path with the outside, is specially designed to behave, depending on the quantity of daily humid input, with the same dimensions:

a) As an appliance that performs only the operations of optimal preparation of the organic (shredding, mixing, drainage of the squeezing water); in this case the wet will be completely processed in the external vertical composter, within which all the degradation reactions will take place.

b) As a real composter, ie as a device in which food remains are discharged and compost is extracted; in this case the external composter is missing.

c) As a device that performs an intermediate function between the two aforementioned extremes, ie a device within which the organic substance stabilizes itself, but which requires the external composter for its complete transformation into mature compost.

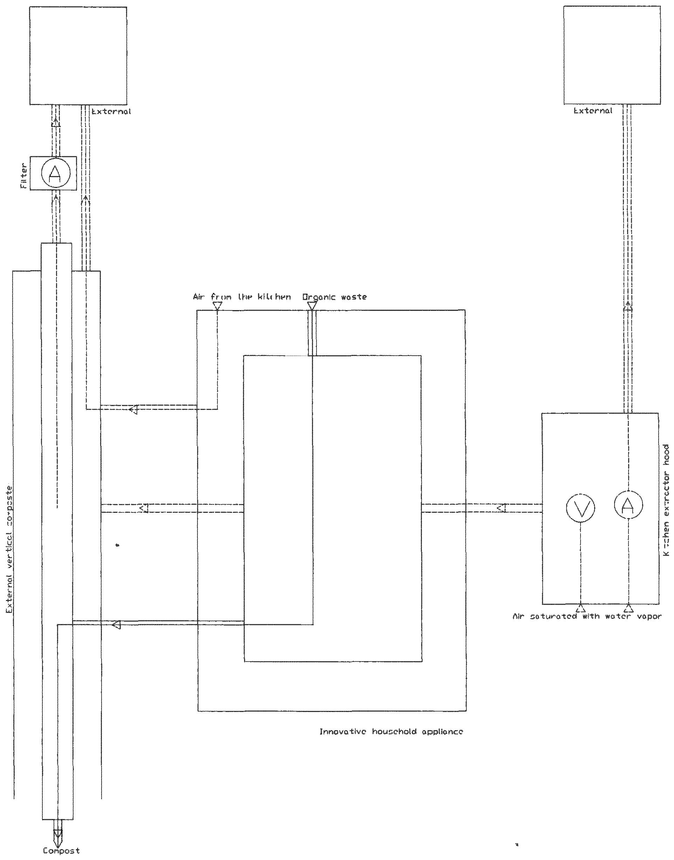

Figures 3 - 4 - 5 are schematic views of the operation of the appliance in the three aforementioned cases.

Fig. 3 schematizes case a). The two housings of the appliance are represented with two rectangles; the reaction chambers are located in the internal one. The external composter is represented with two concentric tubes; composting reactions take place in the internal one and through it the flow of composting air develops which with very low flow rates is naturally aspirated by the chimney effect, while depending on the inputs received from the sensors, it can be blown in large quantities by the fan of the hood possibly helped by the filter aspirator.

A second air way is created by the chimney effect; that is, the air that passes from the kitchen into the cavity of the appliance and from here naturally aspirated through the cavity of the composter is introduced outside.

The electronic control unit, according to the signals it receives from the sensors present in the compostable, starts the fan and the filter aspirator during the cooking of food, when the air in the kitchen is saturated with water vapor. the humidity of the material falls below a certain value; instead, it sends dry air when the humidity exceeds a certain value or even when the temperature exceeds a certain value and it is necessary to cool. In the event that the hood fan is not working while cooking food, the hood extractor still operates to remove steam and odors.

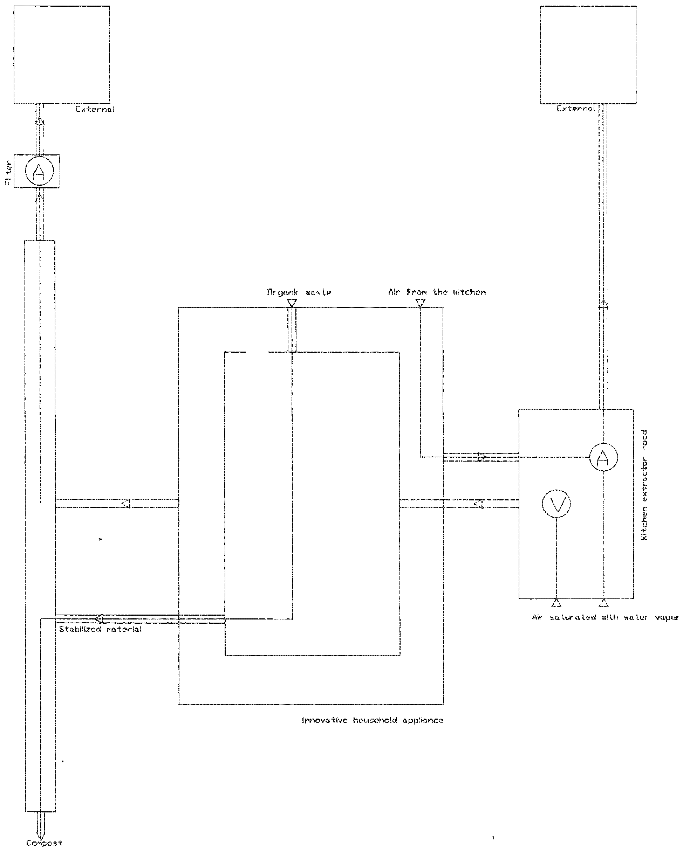

Fig. 4 schematizes case c) in which the wet is transformed into a completely stabilized material inside the appliance, while the maturation phase of the compost takes place in the external composter, which in this case can be of reduced size. For this reason, the function of reducing the atmospheric pressure inside the cavity of the appliance is performed by the extractor fan of the hood.

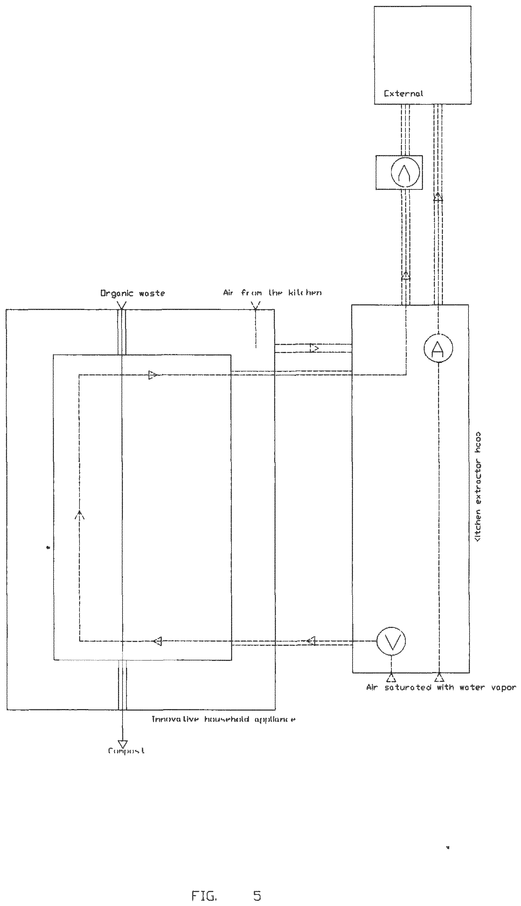

Fig. 5 schematizes the operation of an internal composter, ie the appliance becomes a device in which the wet is introduced and mature compost is extracted after a certain time, however quantifiable in 1-2 months. In this case, therefore, the external vertical composter is replaced by the appliance.

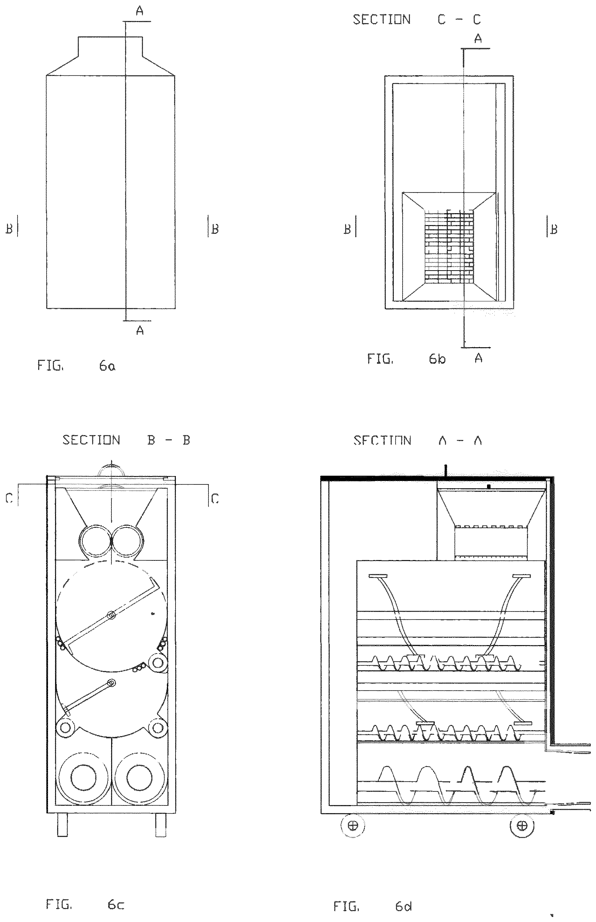

The figs. 6a-6d show lateral, plan and section views of the appliance, respectively, according to a variant that has half the size compared to what has already been described.

The composter shown in figs. 6a-d, therefore, could be used as a composter for a family of 1-3 units or in combination with an external composter for large families (case schematized in fig. 3 and 4).

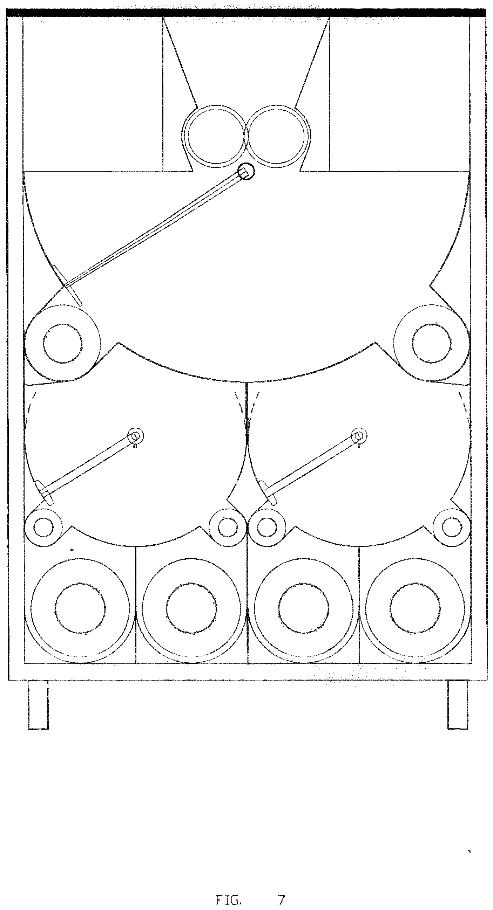

Fig. 7 is a view of a household appliance with different number and shape of the reaction chambers. The apparatus represented therein shows how different embodiments of the invention can be equally applicable to solve the same technical problem, or what is represented in the figures is one of the possible representations of the invention.

Furthermore, the apparatus represented in fig. 7 shows how embodiments of the invention can be equally applicable for the recovery of other types of organic waste, such as biological waste, organic waste from the food processing industry or waste from winemaking processes, etc.

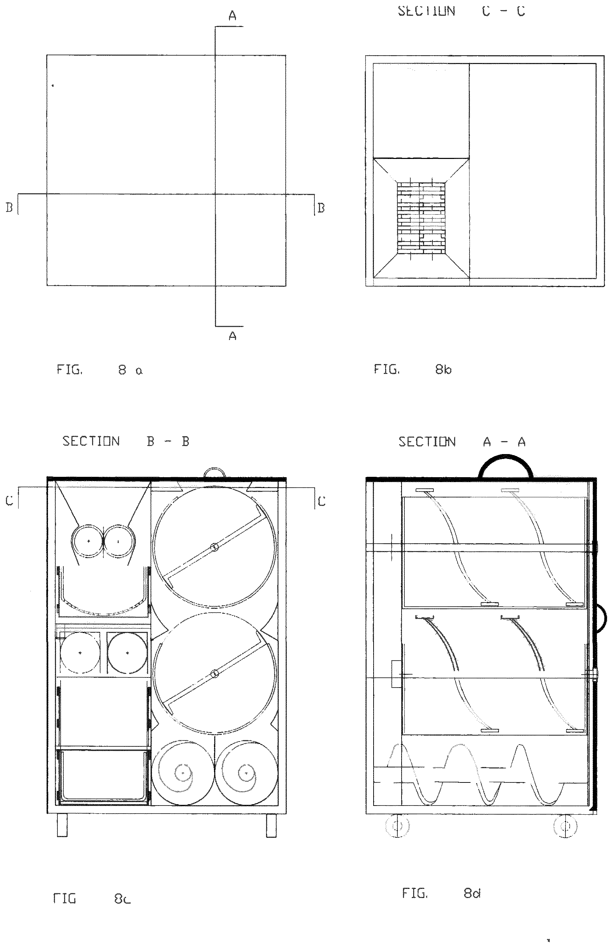

The figs. 8a-d show respectively a side view, in plan, and two sectional views, schematized, of a household appliance that contains devices for the preparation and reduction of volume of the other types of domestic waste for a more efficient and better, both qualitative and quantitative , separate collection, characterized by greater quantities of types recovered and better quality and reduction of service costs. This possibility, of integrating the appliance with other devices, present in the known art of specific appliances that perform only this function, represents an additional option to the composting appliance.

The devices to be integrated into the appliance are: compactor for PET bottles and tetrapak cans; plastic and glass shredder; undifferentiated compactor. The appliance shown in fig. 8 is characterized by different systems for emptying the reaction chambers and containers by means of a rotating container or a small conveyor belt or gravity chute or similar.

The appliance referred to in fig. 8a-d is the indispensable device to allow the residential building to be equipped with a "waste plant". The appliance referred to in figs. 8a-d is the indispensable device to allow the residential building to be equipped with a "waste plant". In fact, if various pipes are connected to it, conveying all types of waste, to be inserted in a technical compartment, adjacent to the kitchen area, specially designed and built for new buildings, or built on the external wall of the building for the existing buildings, the tasks and hassles of the differentiated collection practiced today are eliminated and the differentiation and removal of the various fractions is made automatic, which will be collected at the condominium level and returned and compacted for better recovery and enhancement. The various pipes to be inserted in the technical compartment correspond to: vertical composter; plastic conveying tube; paper and cardboard conveying tube; glass conveying tube; metal conveying tube; undifferentiated conveying pipe. These pipes convey the various fractions of waste, previously shredded and / or compacted in the appliance, to the various condominium containers located on the ground or basement floor, where they will be collected with automated mechanical systems by the means responsible for the differentiated collection of the various types.

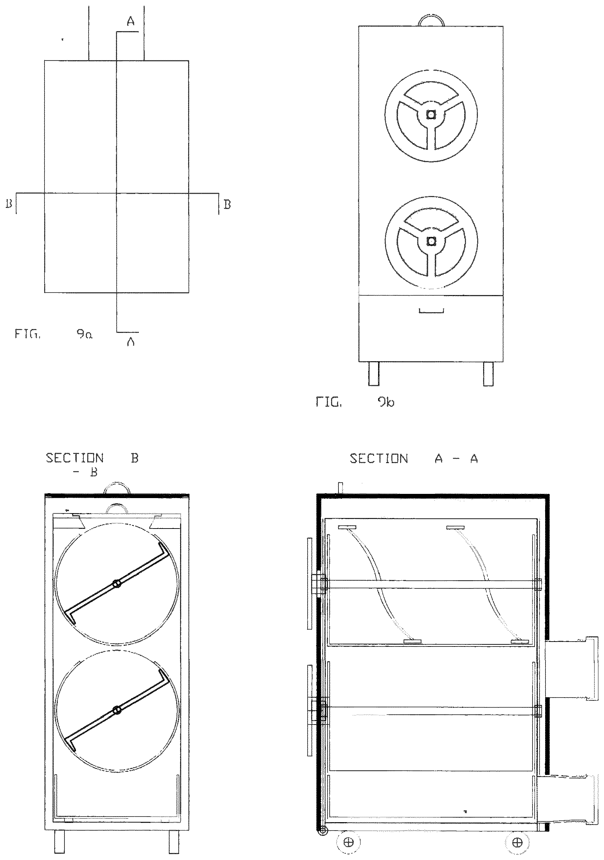

The figs. 9a-d respectively show a side view, one in plan and two in section of an apparatus according to a further preferred embodiment of the invention, comprising: crank for turning the stirrers; external handlebar for turning the container over; movement system on wheels; tube for the composting air route and tube for the air flow from the cavity.

This apparatus is characterized by:

- Manual material turning systems;
- Manual material emptying systems;
- Connection systems to the external vertical mobile composter, i.e. made up of flexible hoses that are manually detachable and reclosable by caps;
- Possibility of moistening the material with a nebulizer;
- Possibility of being connected to the external composter, allocated either inside the kitchen or on the balcony-terrace;
- Possibility of being detached from the composter and transported near the wet production area or near the shredder for the transfer of the same and for connection to the various ventilation / humidification systems.

**Detailed description of two application examples of realization**

With reference to the apparatus represented in the attached figures 2a-d, two examples are shown that show how the same appliance can be used:

- In combination with the external vertical composter, for the recovery of the quantities of wet produced by a typical restaurant (claims 1-2);

- On its own (fig. 5), as an indoor composter used by a family consisting of 5 components.

The machine in the example has standard external dimensions compatible with insertion in the modular kitchen, namely:
0.58 x 0.60 x 0.90 m
The mixing-fermentation chambers have a diameter of 0.28 m and a length of 0.46 m for a maximum capacity of:

$$0.14 \text{ x } 0.14 \text{ x } 3.14 \text{ x } 0.46 / 2 + 0.28 \text{ x } 0.46 \text{ x } 0.10 = 0.014 + 0.013 = 0.027 \, \text{m}^3$$

This quantity corresponds to a maximum quantity of processable material of 0.020 cubic meters, considering a maximum filling of the chamber equal to 75% of the capacity.
The fermentation-biooxidation chambers have a capacity of:

$$0.14 \text{ x } 0.14 \text{ x } 3.14 \text{ x } 0.46 / 2 + 0.28 \text{ x } 0.46 \text{ x } 0.044 = 0.014 + 0.006 = 0.020 \, \text{m}^3$$

Considering a filling of the chamber always equal to 75% of the capacity, we have: 0.020 x 0.75 = 0.015 m³ = 15 litres
The stabilization chambers have a capacity of

$$0.07 \text{ x } 0.07 \text{ x } 3.14 \text{ x } 0.46 / 2 + 0.28 \text{ x } 0.46 \text{ x } 0.078 = 0.0035 + 0.010 = 0.0135$$

Considering a filling percentage of 90%, we obtain:

$$0.0135 \text{ x } 0.9 = 0.0121 \, \text{m}^3 = 12 \, \text{l}$$

The composting cycle is described below first and then the quantities are calculated. **Case** 1: "Used as a composter by a family of 5".
The literature data used in the calculation are:

- Average per capita wet production of 0.2 - 0.3 Kg / d inhab; this average value depends on the family's eating habits (consumption of fruit and vegetables; use of salads, ready-to-use soups; recycling of cooked foods, etc.); from the season (increased production of waste in the summer); etc.; assumed value 0.25 Kg / d ab.
- Regarding the production of wet in a restaurant, we assume 0.15 kg per cover.
- Density of the wet: 0.55 - 0.65 Kg /l; assumed value 0.6 Kg/l.
- Density of the wet after shredding and mixing with structuring agent: 0.8 Kg/l
- Percentage by weight of the structuring agent on the wet: 20 - 30%; assumed value 25%.

A maximum quantity of product equal to 20 liters can be introduced into the mixing tank of the example.
If we assume that the organic produced in 14 days (minimum value to be considered) accumulates in the appliance, we obtain:

$$0.25 \text{ kg x } 5 \text{ people x } 14 \text{ days} = 17.5 \text{ kg (organic weight entered)}$$

Considering a weight loss of 30% due to the removal of the initial squeezing water and the gaseous reaction products developed in the early stages of bioxidation, we have:

$$17.5 \times 0.7 = 12.2 \,\text{Kg}$$

Considering a 25% addition of structuring agent, the weight of the structuring agent is obtained:

$$12.2 \times 0.25 = 3.0 \,\text{Kg}$$

The weight of material that will have been placed in the mixing tray after 14 days:

$$12.2 + 3.0 = 15.2 \,\text{Kg}$$

The specific weight of this material that has been shredded and drained of the squeezing water will likely be 0.8 kg/l. A maximum volume present in the tray is obtained of:

$$15.2 : 0.8 = 19 \,\text{l} < 20 \,\text{l}$$

Suppose we start the recovery of the household waste on January 1st in a new composter, that is, with all the reaction chambers empty.

The operations that will be performed are the following.

01 January

The quantity of 3.0 kg of structuring agent (shredded wood chips or pellets) is introduced in one of the two mixing trays, for example in the left tray. The unloading of the structuring agent into the empty tray is carried out by opening the upper door and pouring the structuring agent into the structuring agent duct.

The opening of the door of the structuring agent can only take place if the fermentation chamber is empty and when the door is lifted the diverter moves to the other mixing chamber and will remain in this position until the mixing chamber is completely filled; only then can the door of the structuring duct of the right chamber be lifted, which will cause the diverter to move to the left chamber.

After the structuring agent has been introduced at the beginning of the cycle into the left mixing chamber, as food remains and organic waste are produced, these will be discharged into the shredder hopper after having lifted the lid. For safety reasons, lifting the lid interrupts the circuit that controls the operation of the shredder and the turners and the operation of all the fans and vacuums.

When the hopper is full or when all the food remains of a lunch or dinner have been introduced, for example, the lid is replaced, the upper door closed and the shredding starts. The shredded material falls into the left tray and is added to the present structuring agent.

During the shredding, the turners and the blowing of air are in action.

In the following days, as more organic waste is produced, the same operations are repeated. The squeezing water or leachate, as they are formed, will cross the perforated surface present in the recess of the auger, will pass into the specially shaped area below to collect them and convey them, with an appropriate slope, into the sewer drain.

The sensors automatically detect the temperature and humidity values and send them to the controller which sends the input to the hydraulic control unit which controls the most appropriate operations: send dry air or water vapor; heat the material or cool; turn over, etc.

After about two weeks, if the maximum quantities are produced every day, or otherwise after several days, the mixing tray will be filled up to 75% of its maximum capacity, as detected by the weight or level sensor.

January 15

At this point the user opens the door of the right structuring agent, which corresponds to the displacement of the diverter to the left, so that the shredded material can fall into the right tray, and loads the quantity of 3.0 kg of structuring agent and repeats the trades until it fills up, worst case after another 14 days.

During these days the compostable present in the left tray will continue to be ventilated, turned, moistened or heated and will continue to degrade, losing weight and volume.

January 29

The left mixing-fermentation chamber is emptied through the operation of the auger. The material contained in it is a mixture of wet processed from 14 to 28 days before and is completely drained and partially degraded. It falls into the left bioxidation chamber where it will be periodically ventilated, turned over, etc.

The emptied mixing-fermentation chamber, before resuming the compostable filling cycle, could be washed with running water together with the shredder blades. That is, in the case of the example, every 28 days or every 56 or even more; the washing water passes through the perforated surface and is conveyed to the sewer.

When the left chamber fills up, suppose after 14 days, you will have:

February 12

The compostable present in the mixing chamber on the right will be discharged into the bio-oxidation chamber below where it will be turned over, ventilated etc., while the upper chamber will continue to be filled for the next 14 days.

February 26

The right fermentation chamber will be filled.

The material from the left bioxidation chamber is discharged, for example by rotating the left auger into the first, from the left, ripening chamber below.

The material present in the left fermentation chamber is discharged into the underlying bio-oxidation chamber and filling is started.

March 12

The same operations are repeated for the right chambers using the third, from the left, maturation container.

March 26

The same operations are repeated for the left chambers using the second, from the left, maturation container.

April 13

The same operations are repeated for the right chambers using the fourth, from the left, maturation container.

April 27

All rooms are full of material.

The maturation chamber which was filled first is emptied. The material that is extracted is mature compost that has stood in the appliance for 98 to 112 days.

The material present in the bio-oxidation chamber above is discharged into the emptied maturation chamber.

The material present in the fermentation chamber above is discharged into the emptied bioxidation chamber.

The cycle can be restarted.

**Case 2:** "Use as an apparatus for the preparation of organic material produced by a restaurant and which will complete the composting process in the external vertical composter".

In this case, the daily amount of moisture to be recovered is much greater, so the dwell time in the appliance will be shorter.

Let's suppose it is serving a restaurant with an average number of daily covers of 60, i.e. with an average production of wet of about 9 Kg / g considering, in the case of the restaurant, a quantity of wet per cover of 0.15 Kg.

An average residence time in the appliance of about 8 days is obtained, considering in this case a maximum quantity of moisture to be inserted in the mixing chambers of 9 kg, due to the lower weight and volume reduction of the compostable resulting from the smaller number of days. in which this stops in the appliance.

The material that will be extracted after 8 days will have undergone an optimal preparation to complete the degradation steps in the external vertical composter. It will have been shredded into the optimal sizes, mixed with the right amount of structuring agent, drained of the leachate, possibly sterilized or pasteurized with the hot air of the ventilated oven and will have undergone the first degradation reactions; in the vertical composter it can stay well ventilated for a minimum of 82 days to naturally transform into mature compost.

A preferred embodiment of the invention is now described, as the subject of the attached claims, with reference to Figures 1a and 1b.

The invention provides a home composter 10 configured to be installed inside a home. The composter comprises an external fairing 1 and an internal casing 2 to the fairing, configured to house one or more operating chambers for the treatment of organic waste.

Between the external fairing 1 and the internal casing 2 there is a cavity configured to allow the passage of air, this cavity faces the operating chambers.

The composter further includes connection means 101 that connect the air space with gas to an additional composter 100 that can be installed outside the house, for example a condominium vertical composter.

The aforementioned connection means are configured to allow a unidirectional gas flow from the cavity to the further composter.

Preferably, the operating chambers comprise a shredding chamber 3 comprising means for cutting organic waste, a mixing chamber 4 comprising mixing means for shredded organic waste and a fermentation chamber 14 for shredded and mixed organic waste. All the chambers are in communication with each other, to allow the flow of organic waste from the grinding chamber 3 to the mixing chamber 4 and then to the fermentation chamber 14. For this purpose, the chambers are arranged in series.

Furthermore, the composter comprises drainage means for the liquid resulting from the treatment of organic waste, these drainage means are in particular associated with the mixing chamber.

Preferably, the drainage means comprise means of connection to the home sewer system.

According to a preferred variant, the composter comprises a control unit, sensors 13 for detecting temperature and humidity and means 12 for delivering air and water vapor in correspondence with the operating chambers. The sensors and delivery means 12 are configured to be automatically activated by the control unit according to the data detected by the sensors 13.

The mixing means can comprise movable blades 6 around a central rotation axis, while the fermentation chamber can comprise movable blades 15 in accordance with an alternating motion.

Furthermore, the composter preferably comprises means 102 for transferring the organic waste treated by the operating chambers to the further composter. Such means may include, for example, a screw system.

In particular, the connection means that put the interspace in gas communication with the further composter and the means for transferring the organic waste towards the latter are respectively made by means of a first and a second pipe 101, 102 (Figure 1b). The first and second tubes are mutually concentric, preferably with the first tube 101 disposed externally to the second tube 102.

Even more preferably, the composter includes means for the natural draft of air from the external environment, configured to allow the passage of air in a unidirectional manner from the outside to the inside of the cavity of the composter.

Below, the salient points of the proposed invention are summarized again.

The invention consists of an appliance for domestic self-composting, or for other single users such as restaurants or canteens, set up with internal circuits in continuity with external routes, so as to be operationally connected to the water / sewer system and to other internal equipment to the kitchen such as extractor hood, flue, oven, clothes washer-dryer, dishwasher or, optionally, external to the building such as a pipe or vertical composter, comprising:

- External fairing 1 equipped with upper openings for the introduction of the humid 20 and the structuring 23 and panel for the control and command of functions and operations.
- Internal frame 2 containing: organic waste shredder 3, equipped with a small loading hopper and lifting lid 21; two mixing trays 4 for collecting the shredded organic matter, which can be selectively filled with a diverter closure system 5 and equipped with, revolving blades 6 integral with axis 7 of horizontal rotation, air or water vapor nozzles 12, temperature sensors 13 , humidity and PH, compostable emptying system with augers housed inside a recess 9 equipped with a mesh surface draining the squeezing liquid and / or leachate and an underlying shaped surface 10 for collecting and conveying the liquids to the sewer pipe or to a tank equipped with a pump for complete recycling in the compostable, tubes 11 for the circulation of the heating fluids; area 22 for communicating the mixing trays with the outside for the visual control of the compostable present in them and for the possible integration of structuring agent, which can be downloaded directly, after opening the door 23; two fermentation trays 14, underneath the mixing trays equipped with the same accessories and devices present in the mixing trays, but with stirrers that perform a pendulum movement; two or more stabilization / maturation containers 16, underneath the fermentation tanks, of the pull-type type for manual emptying of the compost or, in the event of connection with equipment outside the building, equipped with screw systems, for mechanized transfer of the material.
- Devices for the operation and automation of the household appliance such as hydraulic unit 24, housed in specific compartments 18, consisting of a mini hydraulic unit, pumps configured in terms of shafts, doors, valves, motor, hydraulic cylinders, flow dividers, oil pipes under pressure, crank mechanisms necessary for the transfer of the driving force to the various moving parts, gears, reducers, delivery and suction fans, etc.

The aforementioned devices and components, of which the inventive object is constituted, are configured and assembled so that it possesses and / or includes at least the following characterizing systems and circuits:

a. Composting air circuit comprising at least one entrance from the kitchen suction hood or from the entry point of the ventilated oven, a passage through the compostable, a discharge outside the building through a closed duct.
b. Artificial integrative system of heating / cooling of the compostable.
c. Leachate and washing water circuit connected to the sewage water system.
d. Shell structure with air circuit for the removal of odors.
e. Electronic system interfaced with the sensors and with the hydraulic unit connected to the control and operating organs of the appliance.
f. Dimensions and functions specially designed for the optimization of the composting process and for the best on-site recovery of domestic waste.

Preferably, the apparatus of the invention is configured with three distinct types of reaction chambers, corresponding to the different phases of the composting process, so that in them the compostable can be kept at the optimal conditions of oxygenation, temperature and humidity, for the " acceleration of biological degradation processes:

- Mixing tanks, those higher up and with greater volume, communicating with the outside to allow the mixing of the fresh organic material with that discharged in the previous days, mixing with structuring agent, visual control of the physical state of the mixture, drainage water, drying and heating;
- Fermentation-stabilization tanks, the intermediate ones in which the biological degradation reactions of the simplest sugars begin and the temperature, due to the exothermic reactions, rises up to 65 ° C;
- Stabilization-maturation chambers, the lower ones, with smaller volume within which the material cools and slower decomposition begins.

The circuit of the air blown through the compostable can include the following characteristics:

◦ It has different ways for the different reaction chambers and the composting air can be blown through the material present in the different containers with different flow rate, temperature and humidity, to allow changes in the physical parameters of the organic substance present therein up to the optimal values typical for that phase of the composting process in progress;
◦ The different process air ways have an entrance to the kitchen, from the extractor hood or from the inlet of the ventilated oven, are conveyed into the compostable and come out of it through closed ducts, they are conveyed outside the building through ducts. " air outlet that can reach the top above the roof or terrace of the building, are expelled after filtration with a biological filter or activated carbon, possibly integrated with a chemical-physical purification system with the use of ozone or ultraviolet light;
◦ The exit routes closed for expulsion at the top can be the flue connected to the hood, or the duct made in the technical compartment specifically built for new buildings, or an external pipe or vertical composter.

Furthermore, the composting air circuit can be configured in such a way that the composting air, which is passed through the organic material stationed in the various trays, according to the temperature and humidity parameters detected by the sensors, is blown into these specific containers respectively:

- To oxygenate, exclusively; in this case it is aspirated by the hood at room temperature, when all the stoves are off, and blown into the compostable material with minimum flow rates and speeds.
- To oxygenate and humidify; in this case it is sucked saturated, during the cooking of food when water vapor develops, and blown into the compostable material for a few minutes with minimum flow rates and speeds.
- To oxygenate and dry the material present in the mixing trays; in this case it is sucked by the hood fan at room temperature and dry (when all the stoves are off) and blown with high flow rates and speeds into the compostable material present in the mixing trays during the turning of the same, for the time necessary to eliminate all the excess water.
- To oxygenate and cool; in this case the flow of dry air taken from the inlet point of the hood when the stoves are off, and introduced with high flow rates and speeds and for the time necessary to lower the temperature to the optimal values corresponding to the phase of the degradation process in place; if a more rapid lowering of the temperature is required, the flow of dry air can be preceded by the emission of nebulized water for a few seconds.
- To sterilize the material present in the mixing trays by raising the temperature of the same to about 65 ° C and keeping it for at least one hour; in this case the connected apparatus is the oven and the forced ventilation of the same practiced during the cooking of food is used to cool the oven door; the hot air is expelled outside through one of the exit routes, also avoiding the emission into the kitchen of hot air rich in vapors, gases and foul-smelling substances.

- To dry and sterilize, using hot air from the convection oven, the organic residues attached to the blades of the shredder, after having carried out the transfer of the material from the mixing tray to the fermenting tray below and before washing with running water, so that, in addition to eliminating germs and bacteria present on the blades of the shredder and on the small loading hopper, this operation reduces the volume of food residues stuck between the blades and favors the subsequent cleaning of the same with the jet of running water under pressure.

Furthermore, the household appliance of the invention can be provided with an integrative artificial heating / cooling system of the compostable, in such a way that the heating / cooling of the material up to the optimal process temperatures can also be obtained by resorting to the water circuit. which is circulated within metal pipes in contact with the mixing and fermenting trays before being used in the kitchen, so that, if the temperature of the trays is lower than the optimal conditions, they are heated by sanitary water, while if higher, they partially heat the sanitary water, cooling down; the heating of the compostable can also be obtained by subtracting heat from the hot water discharged from washing machines / dishwashers, making it circulate in the specific heat exchanger in contact with the metal containers of the mixing and fermenting tanks, before being discharged into the sewer system. According to further variants of the invention, the household appliance can comprise a washing system for the hopper, shredder, mixing tray and its auger, which can be carried out, after the transfer of the material from the mixing tray to the underlying fermenter, with running water under pressure that can be sprayed from a shower head with tap connected to an extendable hose; the water, after the washing cycle, crosses the containment surface of the augers and collects in the underlying shaped surface from where it flows into the sewer pipe.

In particular, the appliance is equipped with a shell structure for the creation of an airway for the removal of any bad smells outside the building; said air path comprises an inlet from the suction hood, a passage through the gap between the external fairing and the internal frame and an outlet to the outside of the building through closed airways, so as to allow, through the slight depression with respect to the pressure of the kitchen, which occurs in the cavity due to the chimney effect or the suction of the fan, an air path that always maintains the direction of the flow from the kitchen inside the appliance and from here to outside the building and never vice versa, to guarantee any foul-smelling emissions in the kitchen compartment.

Furthermore, the appliance includes an electronic control system that guarantees the efficiency of the composting process, because, through the acquisition of the input data of temperature, humidity, oxygenation of the material detected by the sensors in the individual containers, it acts appropriately on the turning over, blowing hot or cold, humid or dry air, artificial raising of temperature or cooling, ensuring optimal conditions for the activity and proliferation of the specific strains of bacteria corresponding to the composting process.

The apparatus object of the invention preferably has standardized dimensions for installation in modular kitchens, but with the possibility of having larger dimensions both if it is integrated with accessories, such as plastic compactors, tetrapak and cardboard and / or glass shredders for the preparation of the other waste fractions, which in case of use in the kitchens of restaurants or canteens, or have a number of smaller reaction chambers and / or smaller external dimensions if specifically designed for users formed by one or two people (Figs . 6a-d, 7, 8a-d).

In accordance with a preferred variant of the present invention, the household appliance for home self-composting or for other single users such as restaurants or canteens, consists of:

- External fairing equipped with upper openings and touchscreen monitor for the control of operations and for the display and control of operation; internal framework containing the mixing and reaction chambers and the operating organs and devices; the external fairing and the internal casing are separated by a cavity within which an airway is created.
- Organic waste shredder, equipped with a small loading hopper and lifting lid.
- Mixing trays, for collecting the shredded organic material, which can be filled alternatively with a diverter system and containing: turning blades integral with a central rotation axis; compostable emptying system with augers housed inside a recess with a perforated surface, draining the squeezing liquid and / or leachate and an underlying shaped surface for collecting and conveying liquids to the sewer pipe; staff heating system with sanitary hot water heat exchanger and / or hot air emitted by the ventilated and / or electric resistance oven; air and / or water vapor insufflators; sensors for temperature, humidity, weight, air flow, and / or PH.
- Fermentation tanks, underneath the mixing tanks equipped with the same elements and devices as the mixing tanks, but with stirrers that perform a pendulum movement.
- Stabilization containers, underneath the fermentation tanks, equipped with screw systems, for the transfer of the compostable into the external vertical composter.
- Specific compartments obtained in the internal casing or in the area between the two casings containing: hydraulic unit for the operation and automation of the appliance and the external composter consisting of a mini hydraulic unit, pumps configured in terms of shafts, doors, valves, lids, etc., engine, hydraulic cylinders, flow dividers, valves, oil pipes under pressure, etc .; piping for the compostable route; piping for the composting air route; pipes for the way of the air sucked from the cavity of the appliance; crank mechanisms necessary for the transfer of the electromotive force to the various moving parts; connections; valves; sensors for temperature, humidity, air flow; reducers; delivery fans; suction pumps; controller interfaced with the sensors and with the hydraulic unit connected to the control and operating organs of the appliance and the external composter.

- Double system for connecting the appliance to the external vertical composter, consisting of: pipe used both for the discharge of the compostable and for the composting air route; connection pipe between the external casing of the appliance and the external pipe of the vertical composter.
- Connection with the outside through closed air outlets that convey the air at the top above the roof or terrace, and release it into the atmosphere, after any filtration.
- Active carbon composting air filter system.
- Possible integration with biological filter.
- Possible integration with a chemical-physical purification system with the use of ozone or ultraviolet light.

The composting device is preferably characterized by the presence of one or more of the following specificities:

◦ Shell structure.
◦ Dimensions and functions specially designed for inclusion in modular kitchens.
◦ Functional connection with external vertical composter.
◦ Connection with kitchen extractor hood.
◦ Connection with oven.
◦ Connection of the apparatus with the domestic water system.
◦ Connection of the apparatus with the sewer pipe.
◦ Connection of the apparatus with the sanitary water circuit.
◦ Possible connection of the apparatus with dishwasher water drain.
◦ Connection to electrical network.
◦ Possibility of the same machine to carry out different phases of the composting process by delegating to the external composter for the completion of the process, i.e. the apparatus can perform the functions of: shredding, mixing with structuring agent, drainage of the squeezing water, homogenization, that is stages of preparation of the material; preparation of the material plus initial fermentation phase of the simplest sugars.
◦ Preparation for connection to a technical compartment functional to the construction of the residential waste system.
◦ Particular configuration of the apparatus, with various degradation chambers which, together with the connection with the external composter, allow for wet treatment times of more than 90 days, obtaining a mature compost according to specification.

In accordance with what has already been described, in the appliance it is possible to process smaller quantities of wet in order to increase the permanence time of the compostable inside the appliance, allowing the bio-oxidation-stabilization of the organic, leaving the external composter only compost ripening stage.

The preferred features of the invention are listed below:

- The external composter has no double pipe but consists of a single pipe;
- The connection of the appliance with the composter is obtained from a single oblique tube, through which both the compostable and the process air pass, which is sucked by the chimney effect or with the aid of an aspirator located at the top of the external composter , and released into the atmosphere after any filtration.
- The vacuum function inside the cavity of the apparatus is performed by the suction pump of the hood while the blowing of steam air inside the reaction chambers of the apparatus is carried out by means of the delivery fan of the hood.

With reference to the embodiments in which the composting appliance has no connection to the external composter, it is possible to replace the hydraulic system with: electric motor; pulleys; Transmission belts; crank mechanisms necessary for the transfer of the electromotive force to the various moving parts; piping and connections.

This variant is also configured to create:

◦ Ability to produce fresh compost directly inside the appliance, ie inside the kitchen; in this case the compost produced will be collected in the lower containers, which have no screw and puller, and collected one-off by hand;
◦ Connection to the kitchen hood with double air cycle: composting air circuit which is blown by the fan, saturated with steam or dry depending on the amount of humidity of the compostable monitored by the sensors, and sucked by the filter before being sent on the outside; air circuit drawn directly from the kitchen with a direct line and / or with a line crossing the gap between the two casings of the appliance.

∘ Flue connected to the hood consisting of double pipes, possibly one concentric to the other, in which the process air flow will be diverted in one and the intake air flow from the kitchen and from the cavity of the apparatus in the other.

As anticipated, the appliance may include a reduced number of reaction-mixing chambers and therefore of smaller dimensions, suitable for users who produce smaller quantities of wet.

In addition, the appliance may contain devices for the transformation and preparation of other types of household waste, such as: compactor for PET bottles, cans and tetrapak or cardboard containers; plastic shredder, glass; undifferentiated compactor. Additionally, it is possible to configure the appliance in such a way that it can be connected to a technical compartment within which the following are located: vertical composter; plastic conveying tube; paper and cardboard conveying tube; glass conveying tube; metal conveying tube; undifferentiated conveying pipe. These pipes convey the various fractions of waste, previously shredded and / or compacted in the appliance, to the various condominium containers located on the ground or basement floor, where they will be collected with automated mechanical systems by the means responsible for the differentiated collection of the various types.

For the purposes of this discussion, it is understood that the specific shredding means described can be replaced by the cutting, shearing, or fraying mechanism present in the mixing chambers, obtained by the combination of the action of the turners and the auger and by the interposition of blades and / or fixed obstacles that break and shred the wet material due to cut or impact.

## Conclusions

From what has been described it is evident that the instrument according to the invention achieves the intended purposes.

The object of the invention is susceptible of numerous modifications and variations, all falling within the inventive concept expressed in the attached claims.

Although the object has been described with particular reference to the attached figures, the reference numbers used in the description and in the claims are used to improve the intelligence of the invention and do not constitute any limitation to the scope of protection claimed.

## Claims

1. Apparatus (10) for the domestic composting of organic material (20), which can be installed inside the kitchen of a house, including:

   - external fairing (1) equipped with upper openings for the introduction of the organic material (20) and of a structuring substance (23);
   - internal framework (2) comprising: a trituration tank (3) comprising means for grinding the organic material (20); a mixing tank (4) for collecting the shredded organic material (20), comprising first means for moving the organic material (20); an emptying system (9) of the organic material (20) comprising a surface for the drainage of the leachate of the organic material (20), connected to a circuit equipped with means for conveying the leachate to a sewer pipe of the house; a fermentation tank (14) connected to the mixing tank (4), comprising second means for moving the organic material (20); a stabilization-maturation chamber (16) connected to said fermentation tank (14);
   wherein said trituration, mixing and fermentation tanks (3, 4, 14) comprise respective means for delivering air or water vapor (12), heating/cooling means configured to maintain the organic material (20) at optimal conditions of oxygenation, temperature and humidity for the acceleration of biological degradation processes and sensors (13) to detect temperature, humidity and PH of the organic material (20);
   - a hydraulic unit (24) for the operation of said first and second means for moving;
   - a composting air circuit comprising: connection means to a suction hood or to an oven present in the kitchen, in which said connection means face said trituration, mixing and fermentation tanks (3, 4, 14), and an exhaust duct outside the house for the removal of odors; and
   - an integrative artificial heating/cooling system of the organic material (20).

2. Apparatus (10) according to claim 1, wherein said trituration, mixing and fermentation tanks (3, 4, 14) respectively implement distinct types of reaction chambers, corresponding to the different phases of the composting process of the humid which is maintained at optimal conditions of oxygenation, temperature and humidity for the acceleration of biological degradation processes, wherein:

> • said mixing tank (4) comprises means of communication with the outside to allow the mixing of fresh organic material (20) with that discharged in the previous days, the mixing with the structuring substance (23), the visual check of the physical state organic material (20), water drainage, drying and heating of organic material (20);
> • in said fermentation tank (14) the biological degradation reactions of the simpler sugars present in the organic material (20) begin and the temperature, due to the exothermic reactions, rises up to 65°C; and
> • said stabilization-maturation chamber (16) is positioned in a lower position with respect to said trituration, mixing and fermentation tanks (3, 4, 14), has a smaller volume than the latter ones, and comprises means for cooling the organic material (20) to initiate a slower decomposition phase.

3. Apparatus (10) according to claim 1 or 2, wherein said composting air circuit comprises circuit branches connected to respective means for insufflation of air for each of said trituration, mixing, fermentation tanks and stabilization-maturation chamber (16), configured to be operated independently of each other to blow air in accordance with adjustable flow rate, temperature and humidity values, wherein said respective circuit branches comprise suction means of air at an extractor hood or oven present in the kitchen, and exhausting means of air outside the house, connected for example to a flue connected to a kitchen hood, or to a further external vertical composter (100).

4. Apparatus (10) according to claim 3, wherein said composting air circuit is configured to carry out the passage of air through the organic material (20) stationed in said trituration, mixing, fermentation tanks (3, 4, 14) and stabilization-maturation chamber (16) as a function of temperature and humidity parameters detected by said sensors (13), according to the following operating modes:

> • oxygenate exclusively, wherein the suction means takes air at room temperature, which is blown with minimum flow rates and speeds;
> • oxygenate and humidify, in which the suction means takes air saturated with water vapor, for example from the kitchen hood while cooking food which develops water vapor, which is blown for a few minutes with minimum flow rates and speeds;
> • oxygenate and dry the organic material (20) present in the mixing tank, wherein the suction means takes dry air at room temperature which is blown with high flow rates and speeds into the mixing tray during the moving of the organic material (20), to the time needed to remove all excess water;
> • oxygenate and cool, wherein suction means take in dry air which is blown with high flow rates and speeds and for the time necessary for lowering the temperature to the optimal values corresponding to the phase of the degradation process of the organic material (20);
> • sterilize the organic material (20) present in the mixing tray, in which suction means draw high-temperature air from a ventilated oven in the kitchen and blow it into the organic material obtaining temperature conditions of at least 65°C for one hour at least; this hot air is expelled to the outside through said exhausting means, avoiding the emission into the kitchen of hot air rich in vapors, gases and foul-smelling substances;
> • drying and sterilizing residues of organic material (20) present on the shredding means, wherein said suction means draw hot air, for example from the kitchen oven.

5. Apparatus (10) according to one of the preceding claims, wherein said supplementary artificial heating/cooling system of the organic material (20) comprises connection means to a sanitary water circulation circuit which includes metal pipes in contact with said trituration, mixing and fermentation tanks (3, 4, 14) and stabilization-maturation chamber (16), so that, if the temperature of the latter ones is lower than predetermined optimal conditions, they are heated by sanitary water, while if higher than these predetermined conditions, whether they partially heat the sanitary water, cooling down.

6. Apparatus (10) according to one of the preceding claims, comprising a washing system of said trituration and mixing tanks using pressurized running water that can be sprayed through a shower head, comprising means for conveying the washing water to a sewer pipe.

7. Apparatus (10) according to one of the preceding claims, comprising a shell structure implemented by means of said external fairing (1) and said internal framework (2) between which an interspace is made for the passage of air, configured to provide a circulation path of composting air for the removal of bad smells towards the outside of the building, wherein said circulation path of composting air includes an inlet from a kitchen suction hood, a passage through said cavity and an outlet to the exterior of the house through closed airways, so as to allow, through a depression with respect to the pressure of the kitchen that is created in said cavity due to a chimney effect, an airway that always maintains a unidirectional flow of air from the kitchen towards the inside of said apparatus (10) and from the latter towards the outside of the house, to avoid any malodorous emissions in the kitchen.

8.  Apparatus (10) according to one of the preceding claims, comprising an electronic control system interfaced with said sensors (13) and said hydraulic unit (24), configured to acquire data detected by said sensors (13) to automatically activate said first and second moving means and composting air circuit for turning over, blowing hot or cold, humid or dry air, artificially raising the temperature or cooling the organic material (20), ensuring optimal conditions for the activity and proliferation of specific strains of bacteria corresponding to the composting process stage, to ensure the efficiency of the composting process.

9.  Apparatus (10) according to one of the preceding claims, comprising accessory plastic, tetra Pak and cardboard compacting devices and/or glass shredders for the preparation of other waste fractions.

**Patentansprüche**

1.  Apparat (10) für die häusliche Kompostierung organischen Materials (20), die in der 5Küche eines Hauses installiert werden kann, inklusive:

    - externer Verkleidung (1), ausgerüstet mit oberen Öffnungen für die Einführung des organischen Materials (20) und einer strukturierenden Substanz (23);
    - innerem Gestell (2), welches beinhaltet: einen Mahltank (3), der die Möglichkeit zur Zerkleinerung des organischen Materials enthält (20); einen Mischungstank (4) für die Sammlung des geschredderten organischen Materials (20), der das erste Hilfsmittel für die Bewegung des organischen Materials beinhaltet (20), ein Leerungssystem (9) des organischen Materials (20), das eine Oberfläche für die Drainage des Perkolats des organischen Materials enthält (20), verbunden mit einem Ablauf, ausgerüstet mit Hilfsmitteln für die Umleitung des Perkolats in ein Abwasserrohr des Hauses; ein Fermentierungstank (14), verbunden mit einem Mischungstank (4), der ein zweites Hilfsmittel für die Bewegung des organischen Materials (20) enthält; eine Stabilisierungs-Reifungs-Kammer (16), verbunden mit dem Fermentierungstank (14); worin die Zerkleinerungs-, Mischungs- und Fermentierungstanks (3, 4, 14) Mittel für die Beförderung von Luft und Wasserdampf (12) enthalten, Mittel zur Erwärmung/Abkühlung des organischen Materials (20) für optimale Bedingungen der Sauerstoffanreicherung, Temperatur und Feuchtigkeit für die Beschleunigung des biologischen Degradierungsprozesses und Sensoren (13) für die Messung von Temperatur, Feuchtigkeit und des PH-Wertes des organischen Materials (20);
    - eine hydraulische Einheit (24) für den Betrieb besagter erster und zweiter Hilfsmittel zur Bewegung;
    - ein Kreislauf für die Luft des Komposts, die beinhaltet: eine Verbindung zu einer Absaughaube oder einem in der Küche vorhandenen Ofen, und in welcher besagten Verbindung sich die besagten Wannen zur Zerkleinerung, Mischung und Fermentierung (3, 4, 14) befinden, und ein Abluftabzug aus dem Haus heraus für die Entfernung von Gerüchen; und
    - ein integratives künstliches Erwärmungs/Kühlungssystem des organischen Materials (20).

2.  5Apparat (10) nach Anforderung 1, worin die besagten Zerkleinerungs-, Mischungs- und Fermentierungstanks (3, 4, 14) bestimmte Typen von Reaktionskammern implementieren, korrespondierend zu den verschiedenen Phasen des Kompostierungsprozesses der Feuchtigkeit, welche in optimalem Zustand von Sauerstoffanreicherung, Temperatur und Luftfeuchtigkeit der biologischen 10Degradierungsprozesse gehalten wird, worin:

    • besagter Mischungstank (4) beinhaltet Mittel der Kommunikation mit der Außenseite, um eine Mischung von frischem organischem Material (20) mit dem an den vorigen Tagen ausgeführten ermöglicht, die Mischung mit der strukturierenden Substanz (23), der Sichtkontrolle des physikalischen Zustands des organischen Materials (20), Wasserdrainage, Trocknung und Erhitzung des organischen Materials (20);
    • die biologischen Zersetzungsreaktionen der im organischen Material (20) vorhandenen einfacheren Zucker in besagtem Fermentierungstank (14) beginnen und die Temperatur wegen exothermer Reaktionen auf bis zu 65°C steigt; und
    • die besagte Stabilisierungs-Reife-Kammer (16) ist in einer niedrigeren Lage in Bezug auf besagte Zerkleinerungs-, Mischungs- und Fermentierungstanks (3, 4, 14) positioniert, hat ein kleineres Volumen als die vorherigen und beinhaltet Mittel für die Kühlung des organischen Materials (20), um eine langsamere Kompostierungsphase beginnen zu können.

3.  Apparat (10) bezüglich Ansprüchen 1 oder 2, worin der besagte Luftkreislauf der Kompostierung Abzweigungen enthält, verbunden zu den Hilfsmitteln zur Absaugung der Luft für jede der besagten Zerkleinerungs-, Mischungs- und Fermentierungstanks und der Stabilizierungs-Reifungskammer (16), konfiguriert um unabhängig voneinander die Luft mit adjustierbarer Flussrate, Temperatur und Feuchtewerten zu blasen, worin besagte Zweige des Kreislaufs Luftabsaugeinrichtungen an einer Extraktionshaube oder einem in der Küche befindlichen Ofen enthalten, und Absaugmechanismen von Luft außerhalb des Hauses, z.B. verbunden mit einem Abzug zu einer Küchenhaube oder zu einem weiteren vertikalen Komposter (100).

4. Apparat (10) bezüglich Anforderung 3, in welchem der besagte Kompostierungs-Luftkreislauf für den Durchgang des organischen Materials (20) konfiguriert ist, befindlich in besagten Zerkleinerungs-, Mischungs- und Fermentierungstanks (3, 4, 14) und der Stabilisierungs-Reifungskammer (16), als Funktion von Temperatur und Feuchteparametern, detektiert von besagten Sensoren (13), bezogen auf die folgenden Operationsmodi:

• ausschließliche Sauerstoffanreicherung, innerhalb derer die Absaugung Luft bei Raumtemperatur aufnimmt, geblasen mit minimalen Flussraten und Geschwindigkeiten;
• Sauerstoffanreicherung und Befeuchtung, innerhalb derer die Absaugung mit Wasserdampf gesättigte Luft aufnimmt, z.B. von der Küchenhaube während des Essenkochens, welches Wasserdampf produziert, und mit minimalen Flussraten und Geschwindigkeiten geblasen wird;
• Sauerstoffanreicherung und Trocknung des organischen Materials (20) im Mischungstank, innerhalb dessen die Absaugung trockene Luft bei Raumtemperatur aufnimmt, die mit hohen Flussraten und Geschwindigkeiten in die Mischungsschale während der Bewegung des organischen Materials (20) geblasen werden, zum benötigten Zeitpunkt, um überschüssiges Wasser zu entfernen;
• Sauerstoffanreicherung und Kühlung, innerhalb derer die Absaugung mit hohen Flussraten und Geschwindigkeiten geblasene trockene Luft aufnimmt, für die notwendige Zeit zur Erniedrigung der Temperatur auf die optimalen Werte, korrespondierend zur Phase des Zerkleinerungprozesses des organischen Materials (20);
• Sterilisierung des organischen Materials (20), vorhanden in der Mischungsschale, in welcher die Absaugung hochtemperierte Luft von einem ventilierten Ofen in der Küche absaugt und in das organische Material bläst, um einen Temperaturzustand von mindestens 65°C für mindestens eine Stunde zu erreichen; diese heiße Luft wird mittels der besagten Absaugmechnismen nach außen ausgeführt, wobei die Emission von an Dämpfen, Gasen und schlechtriechenden Substanzen reicher heißer Luft in die Küche vermieden wird;
• Trocknung und Sterilisierung von Resten des organischen Materials (20), vorhanden in der Schreddereinheit, in welcher besagte Absaugeinrichtung z.B. vom Küchenofen heiße Luft einziehen.

5. Apparat (10) bezüglich einer der vorhergehenden Anforderungen, innerhalb dessen besagtes zusätzliches, künstliches Erwärmungs/Kühlungs-System des organischen Materials (20) die Verbindungsmechanismen zu einem Trinkwasserzirkulationskreislauf enthält, der Metallrohre mit Kontakt zu besagten Zerkleinerungs-, Mischungs- und Fermentierungstanks (3, 4, 14) und der Stabilisierung-Reifungs-Kammer (16) enthält, so dass, falls die Temperatur der letzteren niedriger als bei vorbestimmten, optimalen Bedingungen ist, sie durch Trinkwasser erwärmt werden, und heruntergekühlt werden, wenn sie höher als bei vorbestimmten Bedingungen sind, und teilweise das Trinkwasser erwärmen.

6. Apparat (10) bezüglich einer der vorhergehenden Anforderungen, der aus einem Waschsystem besagter Zerkleinerungs- und Mischungs-Tanks besteht und unter Druck stehendes laufendes Wasser enthält, das durch einen Duschkopf gesprüht werden kann und einen Mechanismus für den Transport des Waschwassers in ein Abwasserrohr enthält.

7. Apparat (10) bezüglich einer der vorhergenden Anforderungen, der aus einer Gehäusestruktur besteht, implementiert mittels besagten externen Rahmens (1) und besagter interner Einfassung (2), zwischen denen ein Zwischenraum für die Luftströmung hergestellt wird, konfiguriert, um einen Zirkulationspfad der Kompostierungsluft für die Entfernung der schlechten Gerüche zur Außenseite des Gebäudes zu liefern, worin der besagte Zirkulationspfad der Kompostierungsluft einen Einlass von der Abzugshaube der Küche enthält, einen Durchgang durch besagte Aushöhlung und einen Auslass zur Außenseite des Hauses durch abgeschlossene Luftwege, durch einen Unterdruck in Bezug zum Druck der Küche, der in besagter Aushöhlung durch einen Kamineffekt, einen Luftweg, der immer einen gleichgerichteten Luftfluss von der Küche zum Inneren des besagten Apparats (10) aufrecht erhält, und von letzterem zur Außenseite des Hauses führt, um jegliche schlechtriechenden Emissionen in der Küche zu vermeiden.

8. Apparat (10) bezüglich einer der vorangegangenen Anforderungen, bestehend aus einem elektronischen Kontrollsystem, angeschlossen mit besagten Sensoren (13) und besagter Hydraulikeinheit (24), konfiguriert um Daten mit besagten Sensoren aufzunehmen (13), um automatisch die beschriebenen ersten und zweiten Bewegungsmittel zu aktivieren sowie den Umwälzkreislauf für die Kompostluft, heiß oder kalt geblasen, feucht oder trocken, künstlich die Temperatur zu erhöhen oder das organische Material (20) zu kühlen, um optimale Bedingungen für Aktivität und Verbreitung spezifischer Bakterienketten in Bezug zur Stufe des Kompostprozesses, und um die Effizienz des Kompostprozesses sicherzustellen.

9. Apparat (10) bezüglich einer der vorangegangenen Anforderungen, bestehend aus zusätzlichen Vorrichtungen zur Verdichtung von Plastik, Tetra Pak und Karton und/oder Glasschreddern für die Vorbereitung von anderen Abfallbestandteilen.

**Revendications**

1. Un appareillage (10) pour le compostage domestique des matières organiques (20), à installer à l'intérieur de la cuisine d'un logement, contenant :

   - le carénage extérieur (1) doté, d'ouvertures supérieures pour l'introduction des matières organiques (20) et d'une substance structurante (23) ;
   - la structure interne (2) comprenant: une cuvette de trituration (3) contenant les outils de trituration des matières organiques (20) ; un bac de brassage (4) pour la récolte des matières organiques (20) triturées, contenant les premiers supports pour le convoyage des matières organiques (20) ; un système de vidange (9) des matières organiques (20) couvrant une superficie pour le drainage du lixiviat des matières organiques (20), connecté a un circuit équipé de voies d'acheminement du lixiviat au réseau d'égouts du logement; un bac de fermentation (14) relié au bac de brassage, contenant d'autres supports de convoyage des matières organiques (20) ; une cuve de stabilisation-maturation (16) relié au bac de fermentation cité (14) ;
   dans les mentionnés bacs de trituration, de brassage et de fermentation (3, 4, 14) sont contenus les respectifs, supports pour la distribution de l'air ou de la vapeur d'eau (12), outils de réchauffement/refroidissement réglés pour maintenir les matières organiques (20) dans les conditions optimales d'oxygénation, de température et d'humidité pour l'accélération des processus de dégradation biologique, et des senseurs (13) pour relever la température, l'humidité et le PH de la matière organique (20) ;
   - une unité hydraulique (24) pour le fonctionnement des premiers et seconds supports de convoyage cités ;
   - un circuit de l'air de compostage contenant : des voies de liaison à une hotte aspirante ou à un four existant dans la cuisine, et d'où les voies de connexion mentionnées donnent sur lesdits bacs de trituration, de brassage et de fermentation (3, 4, 14), ainsi qu'une conduite d'évacuation vers l'extérieur du logement pour l'expulsion des odeurs et
   - un système artificiel intégré de réchauffement/refroidissement des matières organiques (20).

2. Un appareillage (10) suivant la revendication 1, dont lesdits bacs de trituration, de brassage et de fermentation (3, 4, 14) déploient respectivement différentes typologies de bacs de réaction, qui correspondent aux différentes phases du processus de compostage de l'humide qui est maintenu sous conditions optimales d'oxygénation, de température et d'humidité pour l'accélération des processus de dégradation biologique, et dont :

   • le cité bac de brassage contient des voies de communication avec l'extérieur pour permettre, le mélange des matières organiques (20) fraiches avec celles accumulées les jours précédents, le mixage avec la substance structurante (23), le contrôle visuel de l'état physique des matières organiques (20), le drainage de l'eau, le séchage et le réchauffement des matières organiques (20) ;
   • dans ce bac de fermentation (14) débutent les réactions de dégradation biologique des sucres de base présents dans les matières organiques (20), et la température, par effet des réactions isothermiques, augmente jusqu'à 65 °C ; et
   • ladite cuve de stabilisation-maturation (16) placé en position plus basse par rapport aux bacs de trituration, de brassage et de fermentation (3, 4, 14), présente un volume inférieur comparé à ces dernières, et dispose de moyens de refroidissement des matières organiques (20), afin d'initier une phase de décomposition plus lente.

3. Un appareillage (10) suivant la revendication 1 o 2, dont le mentionné circuit de l'air de compostage contient des branches de circuit connectées aux correspondantes voies d'insufflation d'air pour chacun des bacs de trituration, de brassage, de fermentation ainsi que la cuve de stabilisation-maturation (16), configurées pour être commandées indépendamment l'une de l'autre afin d'insuffler l'air en conformité avec les valeurs ajustables de débit, de température et d'humidité et qui, les citées branches de circuit, sont munies de voies d'aspiration d'air en correspondance d'une hotte aspirante ou d'un four disponibles dans la cuisine, ainsi que de voies d'évacuation d'air vers l'extérieur de l'édifice, reliées par exemple à un conduit de fumée raccordée à une hotte de la cuisine ou à un ultérieur composteur vertical externe (100).

4. Un appareillage (10) suivant la revendication 3, où le mentionné circuit d'air de compostage est configuré pour créer le passage d'air à travers les matières organiques (20) stagnantes dans lesdits bacs de trituration, de brassage, de fermentation (3, 4, 14) ainsi que dans la cuve de stabilisation-maturation (16) en fonction des paramètres de température et humidité relevés par les cités senseurs (13), en respectant les modalités opératives suivantes :

  • oxygéner uniquement, là où les supports d'aspiration prélèvent un air à température ambiante qui est insufflé à un débit et à une vitesse minimes ;
  • oxygéner et humidifier, là où les supports d'aspiration prélèvent un air saturé de vapeur d'eau, par exemple de la hotte de la cuisine pendant la cuisson d'aliments qui développe de la vapeur d'eau, qui est insufflé pendant quelques minutes à un débit et à une vitesse minimes ;
  • oxygéner et sécher les matières organiques (20) présentent dans le bac de brassage, dans lequel les supports d'aspiration prélèvent un air à une température ambiante et sec qui est insufflé à un débit et à une vitesse élevés dans le bac de brassage durant le déplacement des matières organiques (20), pendant un temps nécessaire à éliminer toute l'eau en excès ;
  • oxygéner et refroidir, là où les supports d'aspiration prélèvent un air sec qui est insufflé à un débit et à une vitesse élevés pendant le temps nécessaire afin d'abaisser la température à des valeurs optimales, et qui correspondent à la phase du processus de dégradation des matières organiques (20) ;
  • stériliser les matières organiques (20) déposées dans le bac de brassage, là où les supports d'aspiration prélèvent un air à une température élevée d'un four ventilé disponible dans la cuisine, et l'insuffle sur les matières organiques en obtenant des conditions de température d'au moins 65 °C pendant une heure au minimum ; cet air chaud sera expulsé vers l'extérieur à travers les voies d'évacuation mentionnées, évitant l'émission d'air chaud chargé de vapeur, de gaz et de substances malodorantes ;
  • sécher et stériliser les résidus des matières organiques (20) présents sur les outils de trituration, là où les supports d'aspiration prélèvent de l'air chaud comme par exemple du four de la cuisine.

5. Un appareillage (10) suivant une des revendications précédentes, où le mentionné système artificiel complémentaire de réchauffement/refroidissement des matières organiques (20) contient des voies de connexion à un circuit de circulation d'eau sanitaire qui englobe des tubes métalliques à contact avec lesdits bacs de trituration, de brassage, de fermentation (3, 4, 14) et la cuve de stabilisation-maturation (16), de sorte que si la température de ces dernières est inférieur aux conditions optimales prédéterminées, elles soient réchauffées par l'eau sanitaire, au contraire si supérieur aux conditions prédéterminées, elles puissent réchauffer en partie l'eau sanitaire, et se refroidir.

6. Un appareillage (10) suivant une des revendications précédentes, doté d'un système de lavage des bacs de trituration et de brassage mentionnés, utilisant l'eau courante sous pression pulvérisable à travers un pommeau de douche, et qui prévoient des passages d'acheminement de l'eau de lavage vers une conduite d'égout.

7. Un appareillage (10) suivant une des revendications précédentes, doté d'une structure à coquille implémentée en utilisant les mentionnés carénage extérieur (1) et structure interne (2) entre lesquels est réalisé un écart/cavité pour le passage d'air, configuré pour une voie de circulation de l'air de compostage afin de dissiper les relents vers l'extérieur de l'édifice, et où seront positionnés un accès pour hotte d'aspiration de la cuisine, un passage à travers la cavité susmentionnée et une évacuation vers l'extérieur de l'édifice au moyen de passages d'air fermés, pour consentir, à travers une dépression face à la pression de la cuisine qui se vérifie par effet cheminée dans ladite cavité, un chemin d'air qui garde toujours une unique direction pour l'afflux d'air de la cuisine vers l'intérieur de l'appareillage (10) en question, et de ce dernier vers l'extérieur de l'édifice, afin d'empêcher d'éventuels rejets malodorants dans la cuisine.

8. Appareillage (10) suivant une des revendications précédentes contenant, un système de contrôle électronique relié aux senseurs mentionnés (13) ainsi qu'a l'unité hydraulique évoquée (24), configuré pour recueillir les données relevées par les senseurs (13) pour activer automatiquement les mentionnés premiers et seconds supports de déplacement et le cité circuit d'air de compostage afin de réaliser le retournement, l'insufflation d'air chaud ou froid, humide ou sec, la hausse artificielle de la température ou le rafraichissement des matières organiques (20), tout en assurant les conditions optimales pour l'activité et la prolifération de spécifiques variétés de bactéries qui correspondent à la phase du processus de compostage, afin de garantir justement l'efficience du processus de compostage.

9. Appareillage (10) suivant une des revendications précédentes, contenant des dispositifs accessoires compacteurs de plastique, tétrapack, carton, et/ou broyeur de verre pour la préparation de toutes autres portions de déchets.

FIG.    1 a

FIG.    1 b

A

SECTION C - C

(23)                    (23)

B                        B

(20)

FIG. 2 a          A

FIG. 2 b

SECTION B - B

SECTION A - A

FIG. 2 c

FIG. 2 d

External

Filter

(A)

External

Air from the kitchen    Organic waste

Kitchen extractor hood

(V)   (A)

External vertical compaste

Air saturated with water vapor

Compost

Innovative household appliance

External

Filter Ⓐ

External

Organic waste   Air from the kitchen

Ⓐ

Ⓥ

Kitchen extractor hood

Air saturated with water vapor

Stabilized material

Innovative household appliance

Compost

27

External

Organic waste

Air from the kitchen

Kitchen extractor hood

Air saturated with water vapor

Innovative household appliance

Compost

FIG.    5

A

B|                    |B

FIG. 6a

SECTION C - C

A

B|                    |B

FIG. 6b A

SECTION B - B

C|                    |C

FIG. 6c

SECTION A - A

FIG. 6d

FIG. 7

FIG. 8 a

SECTION C - C

FIG. 8b

SECTION B - B

FIG 8c

SECTION A - A

FIG. 8d

FIG. 9a

FIG. 9b

SECTION B - B

SECTION A - A

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- EP 2772474 A
- EP 0001429407 A
- US 2018215676 A1
- JP H06107303 A
- KR 20030039880 A